(19) Europäisches Patentamt
European Patent Office
Office européen des brevets

(11) EP 1 423 197 B1

(12) **FASCICULE DE BREVET EUROPEEN**

(45) Date de publication et mention de la délivrance du brevet:
**02.03.2005 Bulletin 2005/09**

(21) Numéro de dépôt: **02774877.1**

(22) Date de dépôt: **20.08.2002**

(51) Int Cl.[7]: **B01J 45/00**, G21F 9/12, B01J 39/16

(86) Numéro de dépôt international:
**PCT/FR2002/002905**

(87) Numéro de publication internationale:
**WO 2003/018194 (06.03.2003 Gazette 2003/10)**

(54) **MATERIAU SOLIDE COMPOSITE FIXANT DES POLLUANTS MINERAUX, SON PROCEDE DE PREPARATION ET PROCEDE DE FIXATION DE POLLUANTS MINERAUX LE METTANT EN OEUVRE.**

FESTER VERBUNDWERKSTOFF ZUM BINDEN VON MINERALISCHEN SCHADSTOFFEN, VERFAHREN ZU DESSEN HERSTELLUNG UND VERFAHREN ZUR BINDUNG VON MINERALISCHEN SCHADSTOFFEN UNTER VERWENDUNG DESSELBEN

COMPOSITE SOLID MATERIAL FIXING MINERAL POLLUTANTS, METHOD FOR PREPARING SAME AND METHOD FOR FIXING POLLUTANTS USING SAME

(84) Etats contractants désignés:
**AT BE BG CH CY CZ DE DK EE ES FI FR GB GR IE IT LI LU MC NL PT SE SK TR**

(30) Priorité: **22.08.2001 FR 0111004**

(43) Date de publication de la demande:
**02.06.2004 Bulletin 2004/23**

(73) Titulaires:
- **COMMISSARIAT A L'ENERGIE ATOMIQUE 75752 Paris Cédex 15 (FR)**
- **CENTRE NATIONAL DE LA RECHERCHE SCIENTIFIQUE (CNRS) 75794 Paris Cedex 16 (FR)**
- **Société Technique pour l'Energie Atomique TECHNICATOME 91192 Gif sur Yvette Cedex (FR)**

(72) Inventeurs:
- **VIDAL-MADJAR, Claire F-75013 Paris (FR)**
- **MILLOT, Marie-Claude F-75012 Paris (FR)**
- **BISPO, Isabelle F-75014 Paris (FR)**

(74) Mandataire: **Poulin, Gérard et al Société BREVATOME 3, rue du Docteur Lancereaux 75008 Paris (FR)**

(56) Documents cités:

| | |
|---|---|
| **EP-A- 0 522 856** | **DE-A- 4 021 046** |
| **FR-A- 2 737 426** | **FR-A- 2 765 812** |
| **GB-A- 1 115 258** | **US-A- 3 345 305** |
| **US-A- 5 407 889** | **US-A- 5 601 722** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 423 197 B1

Printed by Jouve, 75001 PARIS (FR)

## Description

La présente invention a trait à un matériau solide composite fixant des polluants minéraux, à base d'hexacyanoferrates et de polymère cationique, déposé en couche pelliculaire sur un support.

Plus précisément, la présente invention concerne un matériau solide composite fixant des polluants minéraux formé d'un support solide mécaniquement et chimiquement stable revêtu d'une pellicule d'un polymère échangeur d'anions, spécifique, à savoir un polycation porteur de groupements ammonium quaternaires auquel est fixée une couche mince d'hexacyanoferrate insoluble.

La présente invention a également trait au procédé de préparation dudit matériau solide composite fixant des polluants minéraux à base d'hexacyanoferrates.

La présente invention concerne enfin un procédé de fixation d'au moins un polluant minéral contenu dans une solution, sur ledit matériau solide composite fixant des polluants minéraux.

De nombreux fixateurs minéraux, ont été utilisés pour la fixation de divers polluants minéraux tels que des cations métalliques contenus dans les milieux et effluents divers issus de diverses industries et en particulier de l'industrie nucléaire.

En effet, l'industrie nucléaire utilise pour le traitement des effluents de faible ou moyenne radioactivité des techniques d'épuration avec réduction de volume consistant dans la fixation sur solide minéral des radioisotopes présents dans les solutions. Les volumes traités actuellement sont énormes et atteignent plusieurs dizaines de milliers de $m^3$/an pour la France. Les liquides traités sont également de nature variée puisqu'il s'agit aussi bien de traiter les eaux de refroidissement des centrales nucléaires que les effluents divers entrant en contact avec des radioisotopes tels que toutes les eaux de lavage, les solutions de régénération des résines etc...

Les hexacyanoferrates notamment les hexacyanoferrates (II) de Cu, Ni et Co sont parmi les fixateurs minéraux les plus couramment utilisés, en particulier dans l'industrie nucléaire en raison de la grande affinité qu'ils possèdent vis-à-vis du césium. Les fixateurs inorganiques de type hexacyanoferrate ont donc notamment été mis en oeuvre pour séparer, récupérer et fixer les ions métalliques et en particulier les ions de métaux alcalins radioactifs tels que le césium 137 à longue demi-vie à partir de divers effluents industriels et nucléaires, par exemple à partir des solutions fortement acides issues du retraitement des combustibles irradiés et des solutions déjà citées plus haut.

Actuellement, les hexacyanoferrates insolubles entrent ainsi dans la plupart des procédés de traitement des déchets radioactifs liquides par coprécipitation.

Le document FR-A-2 765 812 décrit le mode de préparation et d'utilisation en colonne d'un matériau composé d'hexacyanoferrate métallique fixé sur un support solide chimiquement et mécaniquement stable, revêtu d'une pellicule mince de polymères organiques échangeurs d'anions pour la fixation d'au moins un polluant minéral, issu en particulier d'un liquide ou d'un effluent de l'industrie nucléaire. Le produit, tout d'abord préparé, puis conditionné sous forme de colonne, permet la fixation totale et irréversible du césium 137.

Dans ce matériau, l'anion hexacyanoferrate est adsorbé sur le polymère échangeur d'anions recouvrant un support solide sous forme de pellicule, par des interactions de type électrostatique et, de ce fait, adhère fortement au support. Cette liaison met en jeu des phénomènes d'adsorption dans les pores comme dans les hexacyanoferrates imprégnés. Le dépôt de l'hexacyanoferrate est effectué uniformément sur toute la surface modifiée du support. Tous les sites d'échanges possibles du polymère sont échangés, la composition et les propriétés du matériau sont parfaitement contrôlées et reproductibles au contraire des matériaux de l'art antérieur à ce document. Il n'existe plus à la surface du matériau d'hexacyanoferrates résiduels susceptibles d'être relargués et perturbant par la suite le processus de fixation.

Le matériau présente une surface de contact du même ordre de grandeur que la surface spécifique du support sélectionné, ainsi la réactivité de l'hexacyanoferrate de cuivre est accrue.

Le coefficient de distribution du césium est élevé (Kd > 100 000) et comparable à ceux des hexacyanoferrates imprégnés avec des quantités d'hexacyanoferrate de 1 à 2 % en masse par rapport à la masse de support. C'est en particulier la raison pour laquelle il est possible de stocker facilement le matériau de ce document qui est stable et essentiellement minéral.

Le polymère échangeur d'anions composant le matériau du document FR-A-2 765 812 est décrit de manière très générale comme étant un polymère organique pourvu de groupements cationiques.

Selon ce document, le polymère organique est choisi de préférence parmi les polyvinylimidazoles, les copolymères du vinylimidazole avec au moins un autre monomère, les polyéthylèneimines, les polyamines et tout polymère porteur d'un groupement cationique. Ce groupement cationique peut être notamment choisi parmi les groupements ammonium, phosphonium, sulfonium. Le polymère utilisé dans les exemples est un polyvinylimidazole réticulé et quaternisé, ainsi qu'un polyéthylèneimine réticulé.

On sait que le choix du polymère porteur de groupements cationiques formant la première couche adsorbée sur le support solide, par exemple poreux, est essentiel dans la synthèse du matériau composite.

Dans le document FR-A-2 765 812, il est expliqué que tout polymère échangeur d'anions convient, à ces

buts, à condition de former une pellicule ou un film très adhérent à la surface du support. Dans le brevet précité, pour obtenir une bonne adhérence, une bonne tenue du polymère sur le support et un film stable sur ce même support, il est dans la plupart des cas nécessaire de réticuler le polymère par liaison covalente sur ledit support. Pour le polymère, une réticulation n'est pas généralement nécessaire. Une réticulation est en particulier indispensable pour obtenir un film stable, adhérant au support, tel que la silice, avec des polymères, tels que les polyêthylèneimines (PEI) et les polyvinylimidazoles (PVI). Or, ces étapes de réticulation et/ou de fixation par liaison covalente ou greffage pour obtenir l'immobilisation du polymère, par exemple de la PEI sur le support sont longues et difficiles. En effet, ces étapes se font en mode discontinu « batch » en milieu organique avec des temps de réaction allant jusqu'à 48 heures et nécessitent au préalable un séchage sous vide du support.

Par ailleurs, il a été également observé que lors de l'étape de formation de l'hexacyanoferrate de métal insoluble, par exemple de cuivre, décrite dans FR-A-2 765 812, les ions de métal pouvaient former avec les groupements du polymère des complexes instables. Ainsi, lors de l'étape de la formation de l'hexacyanoferrate de cuivre, il a été constaté que les ions de métal, par exemple de cuivre en solution, pouvaient se fixer sous forme de complexes sur les groupements amines primaires, secondaires et tertiaires du film de polymère, par exemple de PEI ou PVI, pour donner ainsi des complexes instables.

Lorsque des ions de métal, tels que les ions cuivriques sont complexés par le polymère, des problèmes de relayage ultérieur de ces ions, à partir du matériau solide composite, ont été observés, nécessitant de longues étapes de lavage après contact du support avec le sel de métal, tel que le nitrate de cuivre.

Il existe donc un besoin pour un matériau solide composite fixant les polluants qui par rapport au matériau solide composite de l'art antérieur, tel que représenté essentiellement par le document FR-A-2 765 812, ne comporte pas de complexes métalliques instables induisant des phénomènes de relargage, qui puisse être préparé par un procédé simplifié, fiable, et comportant un nombre réduit d'étapes, qui présente des propriétés parfaitement contrôlées, stables et sans variations aléatoires, et dans lequel en particulier le polymère soit fixé de manière très adhérente, très stable au support sans avoir recours à des opérations de greffage et/ou réticulation compliquées et longues.

Il est bien évident que ce matériau doit également satisfaire aux critères et exigences qui sont pour la plupart déjà satisfaits par le matériau composite solide de l'art antérieur représenté par FR-A-2 765 812.

En particulier, ce matériau doit être chimiquement et mécaniquement stable pour pouvoir être ainsi conditionné en colonne permettant une mise en oeuvre en continu.

Le matériau solide composite fixant des polluants minéraux doit également avoir d'excellentes propriétés de fixation, en particulier de décontamination, c'est-à-dire analogues, voire supérieures notamment à celles des hexacyanoferrates non imprégnés sur un support.

Le matériau solide fixant des polluants minéraux doit aussi associer une bonne stabilité mécanique à une vitesse de réaction élevée à l'opposé des produits sous forme compacte dont la faible surface spécifique conduit à des vitesses de réaction lentes.

Autrement dit, le matériau solide fixant des polluants minéraux, à base d'hexacyanoferrates de métal doit présenter entre autres des stabilités mécaniques et chimiques excellentes, un fort coefficient d'affinité ou de décontamination, une grande réactivité, ainsi qu'une bonne sélectivité.

Ces propriétés doivent être obtenues avec une quantité minimale de fixateur minéral de type hexacyanoferrates de métal.

De plus, en particulier dans le cas de la fixation d'éléments radioactifs, il faut que le matériau solide composite fixant des polluants minéraux puisse être aisément stocké et/ou vitrifié sans risque par les procédés connus.

Enfin, le matériau doit présenter une composition et des propriétés parfaitement reproductibles et contrôlées, et doit être préparé par un procédé fiable.

La présente invention a donc pour but de fournir un matériau solide composite fixant des polluants minéraux à base d'hexacyanoferrates de métal, qui ne présente pas les inconvénients, défauts, désavantages, et limitations des matériaux solides composites fixant des polluants minéraux de l'art antérieur, tel que représenté essentiellement par le document FR-A-2 765 812, qui surmonte les problèmes des matériaux de l'art antérieur et qui remplisse, entre autres, l'ensemble des besoins mentionnés plus haut.

Ce but, et d'autres encore, sont atteints, conformément à l'invention, par un matériau solide composite fixant des polluants minéraux, à base d'hexacyanoferrate de métal, comprenant un support solide revêtu d'une pellicule d'un polymère échangeur d'anions auquel est fixé un hexacyanoferrate de métal insoluble formant une couche mince, caractérisé en ce que ledit polymère est un polymère non réticulé, qui comporte en tant que groupes échangeurs d'anions uniquement des groupes ammonium quaternaires, et en ce qu'il ne comporte pas de groupements amines primaires, secondaires et tertiaires.

De préférence, ledit polymère cationique, échangeur d'anions est un polybrène® (marque déposée par les laboratoires Abbot) ou bromure d'hexadiméthrine ou encore poly(dibromure de N,N,N', N'-tétraméthyltriméthylène-hexaméthylènediammonium) $(C_{13}H_{30}Br_2N_2)_x$. N° CAS [2 8728-55-4], qui est un polymère soluble dans l'eau, largement utilisé dans les applications biochimiques et qui contient uniquement des groupements ammonium quaternaire.

La formule du polybrène® est la suivante :

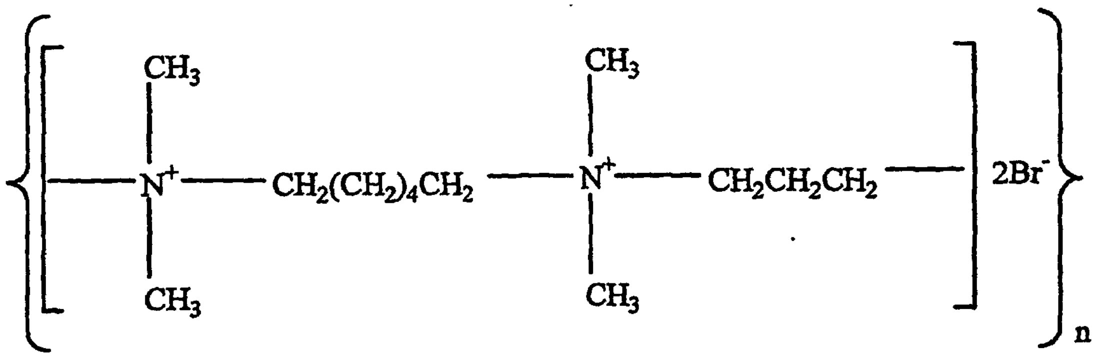

Le matériau selon l'invention se distingue fondamentalement des matériaux de l'art antérieur et notamment de ceux décrits dans le document FR-A-2 765 812.

En effet, selon l'invention, on réalise la sélection d'une famille restreinte, spécifique de polymères parmi les nombreux polymères cationiques existants et cités dans le document susmentionné. Cette famille restreinte de polymères est spécifiquement définie selon l'invention par le fait que ces polymères comportent en tant que groupes échangeurs d'anions uniquement des groupes ammonium quaternaire, en ce qu'ils ne comportent pas de groupements amines primaires, secondaires et tertiaires, enfin, en ce qu'ils ne sont pas réticulés.

De manière surprenante, ces polymères spécifiques permettent de résoudre les problèmes posés par les matériaux de l'art antérieur, notamment du document FR-A-2 765 812 et améliorent grandement les propriétés des matériaux composites de l'art antérieur. Les matériaux selon l'invention ne présentent pas les inconvénients, limitations, défauts et désavantages des matériaux du document susmentionné et répondent aux critères, exigences énumérés ci-dessus. Le polymère spécifique utilisé selon l'invention présente une excellente adhérence au support, tel que la silice, sans nécessiter aucune réticulation.

Le polymère adhère sur le support, de manière excellente, sans réticulation ou fixation par liaison covalente. Pour les synthèses ultérieures cette adhésion est suffisante pour fixer et précipiter l'hexacyanoferrate métallique. Du fait qu'il ne comporte pas de groupements primaires, secondaires et tertiaires, la formation de complexes de métaux instables est évitée, ainsi que le relargage ultérieur d'ions métalliques, tels que le cuivre, à partir du matériau.

De ce fait, les propriétés du matériau composite sont parfaitement contrôlées, stables et ne subissent pas de variations aléatoires.

La pellicule est fortement adhérente au support et cette pellicule est extrêmement stable. On peut penser que l'adhérence excellente du polymère, tel que le polybrène®, au support provient de l'interaction entre les $NR_4^+$ du polymère et les groupements silanols du support.

L'utilisation dans le matériau selon l'invention des polymères spécifiques, décrits ci-dessus, se répercute aussi, de manière avantageuse, sur le procédé de préparation du matériau, comme cela est décrit en détail plus loin.

Notamment, l'utilisation de polymères cationiques comportant uniquement des groupements ammonium quaternaires, solubles dans l'eau, permet d'adsorber le polymère en milieu aqueux, sans séchage préalable du support avec un temps de contact réduit, de supprimer l'étape de réticulation réalisée à 60°C et d'éviter la formation de complexes avec les métaux, tels que le cuivre, en solution, lors de l'étape de précipitation de l'hexacyanoferrate de métal, tel que le cuivre insoluble, ce n'est pas. le cas avec les polymères de l'art antérieur, tels que le PEI et le PVI, où on observe la formation de complexes instables.

En effet, le polymère utilisé selon l'invention ne comporte pas de groupements amines primaire et secondaire, ce qui évite la formation de complexes avec l'ion de métal, tel que le cuivre. Les étapes de lavage finales sont considérablement réduites.

Le matériau selon l'invention présente une structure spécifique dans laquelle le fixateur minéral en tant que tel, c'est-à-dire l'hexacyanoferrate de métal, se présente sous la forme d'une couche mince qui est immobilisée sur une phase polymérique fixée sur un support, ledit support étant solide et avantageusement, chimiquement et mécaniquement stable, et étant protégé et isolé de l'action du milieu par la couche sous-jacente de polymère.

De ce fait, le matériau selon l'invention est également chimiquement et mécaniquement stable et associe ces stabilités à une vitesse de réaction élevée, et est parfaitement adapté à un conditionnement en colonne.

A titre d'exemple, la stabilité mécanique du matériau selon l'invention s'est révélée parfaite sur colonne, après lavage à l'eau pure pendant plusieurs jours, correspondant à plus de 10 000 volumes de colonne.

Dans le matériau selon l'invention, l'anion hexacyanoferrate est adsorbé sur le polymère, par des interactions de type électrostatique, et de ce fait adhère fortement au support.

La liaison qui existe entre la partie anionique de l'hexacyanoferrate de métal, et le support revêtu du polymère échangeur d'anions, est une liaison de type électrostatique, qui n'est pas une liaison faible de nature mécanique mettant essentiellement en jeu des phénomènes d'adsorption dans les pores comme c'est le cas dans les hexacyanoferrates imprégnés, par exemple sur un gel de silice.

Le dépôt de l'hexacyanoferrate est effectué uniformément sur toute la surface modifiée du support.

Tous les sites d'échanges possibles du polymère échangeur d'anions sont échangés, la composition et les propriétés du matériau selon l'invention sont donc parfaitement contrôlées et reproductibles au contraire des matériaux de l'art antérieur.

Comme, en outre, tous les sites du polymère échangeur d'anions, utilisé dans l'invention, sont des sites ammonium quaternaire donnant une liaison stable et qu'il n'existe aucun autre site du type amine primaire, secondaire et tertiaire donnant des complexes instables, il n'existe plus à la surface du matériau, de métal, par exemple de cuivre résiduel, en excès, susceptible d'être relargué et perturbant par la suite le processus de fixation.

Le matériau selon l'invention présente d'autre part une surface de contact qui est du même ordre de grandeur que la surface spécifique du support choisi. En conséquence, la réactivité de l'hexacyanoferrate est augmentée par rapport à l'art antérieur.

Le coefficient de distribution du matériau selon l'invention qui est de préférence de 10000 à 100000 pour un gramme de matériau est élevée et est comparable à celle des hexacyanoferrates massifs mais les quantités d'hexacyanoferrates mises en oeuvre, sont de manière avantageuse très inférieures à celles des hexacyanoferrates imprégnés sur silice de l'art antérieur.

Ainsi le matériau selon l'invention comprend généralement une quantité d'hexacyanoferrate de métal fixé de 1 à 10 % en poids, de préférence de 2 à 3% en poids par rapport à la masse du support, cette valeur est à rapprocher de la valeur de 30% pour les hexacyanoferrates imprégnés sur silice de l'art antérieur cités plus haut.

On limite la quantité de ferrocyanure qui est fixée et rejetée à l'issue de son utilisation, et on obtient la même efficacité pour une quantité par exemple dix fois moindre d'hexacyanoferrate, car tout le produit fixé est efficace.

C'est en particulier la raison pour laquelle, il est possible de stocker facilement le matériau selon l'invention, qui est stable et essentiellement minéral, et/ou de le vitrifier ce qui était jusqu'à présent impossible avec les matériaux de l'art antérieur.

De manière plus précise, le support solide peut être choisi parmi les supports connus de l'homme du métier et convenant à l'usage décrit ; ces supports solides peuvent être organiques ou minéraux et sont choisis généralement parmi les supports solides chimiquement et mécaniquement stables.

Le support sera ainsi choisi de préférence parmi les oxydes minéraux tels que la silice, l'alumine, l'oxyde de titane, l'oxyde de zirconium, la terre de diatomées, les verres, et les zéolithes; un support préféré est la silice, aisément dieponible à un coût raisonnable.

Le support peut se présenter sous une forme quelconque par exemple sous forme de particules telles que grains, billes, sphères, sous forme de fibres, ou autres ou encore sous forme de membrane, de tube creux, d'étoffe tissée ou non tissée etc...

La granulométrie du support, sous forme de particules, définie par la taille des particules, c'est-à-dire le diamètre dans le cas de particules sphériques, peut varier dans de larges limites et sera généralement de 1 à 500 µm, de préférence supérieure ou égale à 10 µm, de préférence encore supérieure ou égale à 30 µm, par exemple dans les essais en colonnes.

La surface spécifique du support peut également être variable, par exemple de 10 à 500 $m^2/g$, de préférence 30 à 500 $m^2/g$.

Le support est de préférence un support poreux pour permettre une meilleure fixation du polymère.

La taille moyenne des pores du support est variable, et est de préférence de 100 à 1000 Å.

Le polymère échangeur d'anions du matériau solide composite fixant des polluants minéraux selon l'invention est un polymère organique pourvu de groupements cationiques ; tous ces groupements cationiques, échangeurs d'anions étant des groupements ammonium quaternaire, ces groupements ammonium quaternaire sont, par exemple, des groupements $NR_4^+$.

En outre, fondamentalement, le polymère spécifique de l'invention ne comporte pas de groupements amines primaires ou secondaires qui donnent des complexes instables avec les ions de métaux, tels que l'ion cuivre.

Ce polymère organique est choisi de préférence parmi les polymères connus sous le nom de polybrène® dont la formule a déjà été donnée plus haut.

Le polymère spécifique utilisé tel que le polybrène® forme une pellicule, ou film très adhérent à la surface du support, par adsorption sur le support sans qu'il soit nécessaire de procéder à une fixation par liaison covalente et/ou à une réticulation. Ces étapes sont en conséquence supprimées dans le procédé.

L'hexacyanoferrate de métal qui est fixé au polymère échangeur d'anions peut être tout hexacyanoferrate

connu de l'homme du métier, il peut être choisi par exemple parmi les hexacyanoferrates de cuivre, cobalt, zinc, cadmium, nickel, fer, et les hexacyanoferrates mixtes se rapportant à ces sels.

L'invention a également trait à un procédé de préparation du matériau solide composite fixant des polluants minéraux, à base d'hexacyanoferrates, décrit plus haut, ce procédé étant caractérisé en ce qu'il comprend les étapes suivantes :

- imprégnation d'un support solide avec une solution aqueuse d'un polymère échangeur d'anions non réticulé comportant en tant que groupes échangeurs d'anions uniquement des groupes ammonium quaternaires et ne comportant pas de groupements amines primaires, secondaires et tertiaires, pour former une pellicule dudit polymère sur ledit support solide ;
- lavage à l'eau déminéralisée, et éventuellement séchage sous vide ;
- imprégnation du support solide ainsi revêtu d'une pellicule de polymère échangeur d'anions, par une solution aqueuse d'hexacyanoferrate de métal alcalin;
- lavage à l'eau déminéralisée, et éventuellement séchage sous vide, dudit support solide revêtu d'une pellicule de polymère échangeur d'anions auquel est fixé un hexacyanoferrate de métal alcalin;
- addition d'une solution aqueuse d'un sel métallique au dit support solide revêtu, pour former un matériau solide composite fixant des polluants minéraux, comprenant le support solide revêtu d'une pellicule de polymère échangeur d'anions auquel est fixé un hexacyanoferrate de métal insoluble formant une couche mince.
- lavage à l'eau déminéralisée et éventuellement séchage sous vide.

Par rapport au procédé de l'art antérieur, tel que décrit dans le document FR-A-2 765 812,qui met en oeuvre des polymères cationiques non spécifiques, le procédé selon l'invention, grâce à l'utilisation des polymères spécifiques décrits plus haut et de préférence d'un polybrène® présente de nombreux avantages, entre autres :

- l'adsorption du polymère, qui est soluble dans l'eau, se fait en milieu aqueux, à partir d'une solution aqueuse et non en milieu organique, sans séchage préalable, sous vide, du support, et ce temps de contact est réduit, par exemple à 1 heure ;
- l'adhérence du polymère sur le support, tel que la silice, est excellente, ce qui supprime les étapes de réticulation, réalisée à 60°C, (très longues) et de fixation par liaison covalente, en outre, l'étape de création de groupements cationiques n'existe pas non plus, puisque le polymère comporte dès le départ les groupements cationiques nécessaires.

Autrement dit, selon l'invention, on obtient une pellicule de polymère fortement adhérente en une étape unique d'adsorption par simple contact, sans mise sous vide, d'une durée, par exemple, voisine de 1 heure, sans séchage préalable et réticulation, au lieu d'avoir recours à au moins trois étapes longues et difficiles dont la durée peut aller jusqu'à 48 heures, qui sont consommatrices d'énergie et nécessitent une mise sous vide et un chauffage.

En outre :

- la fixation de l'anion hexacyanoferrate par imprégnation à l'aide d'une solution d'hexacyanoferrate de métal alcalin peut se faire de manière simplifiée, de préférence à partir d'eau pure.

  En effet, le nombre de groupements ionisés du film de polymère spécifique selon l'invention ne dépend pas du pH, ce qui n'est pas le cas avec les polymères contenant des fonctions amines primaires, secondaires ou tertiaires (PEI, PVI) dont le degré d'ionisation dépend du pH ;
- lors de l'étape de précipitation de l'hexacyanoferrate de métal insoluble, la formation de complexes avec les ions de métaux, tels que le cuivre en solution, est évitée, car le polymère, mis en oeuvre selon l'invention, tel qu'un polybrène®, ne comporte pas de groupements amines primaires, secondaires et tertiaires pour écarter la formation de complexes avec le cuivre.

En d'autres termes, lors de cette étape de précipitation de l'hexacyanoferrate de métal, tel que le cuivre, il n'y a pas de formation de complexes entre le polymère, tel que le polybrène® et les ions de métal de la solution, tel que le cuivre, puisque les atomes d'azote sont sous la forme d'ammoniums quaternaires dépourvus de doublets libres, ce qui n'est pas le cas avec les supports, tels que la silice, traités par d'autres polymères, tels que le PEI et le PVI, ou avec les silices aminées, pour lesquelles on a observé la formation de complexes instables entre les atomes d'azote et le métal, tel que le cuivre.

En conséquence, selon l'invention, et du fait qu'il n'y a pas relargage d'ions de métal à partir du matériau, les longues opérations de lavage suivant la mise en contact du support avec un sel métallique sont considérablement réduites.

En résumé, ce procédé, faisant appel à des polymères cationiques spécifiques, est simple, fait appel à des

processus connus et éprouvés, est fiable et parfaitement reproductible, c'est-à-dire qu'il permet le préparation d'un produit final dont les caractéristiques, la composition et les propriétés sont parfaitement déterminées, et ne subissent pas de variations aléatoires.

Le procédé de préparation selon l'invention se distingue totalement des procédés de l'art antérieur notamment ceux faisant appel à une simple précipitation sur un support.

L'invention concerne enfin un procédé de fixation d'au moins un polluant minéral tel qu'un cation métallique contenu dans une solution, par mise en contact de ladite solution avec le matériau solide composite fixant des polluants minéraux, décrit plus haut.

L'invention va maintenant être décrite plus en détail dans ce qui suit en faisant en particulier référence au procédé de préparation.

La première étape de ce procédé consiste en l'imprégnation d'un support solide avec une solution de polymère organique sur ledit support solide.

Le support solide est l'un de ceux qui ont déjà été mentionné plus haut, un support préféré étant la silice Lichrospher® 100 de la société Merck®, le polymère est également l'un de ceux qui ont été cités ci-dessus, le polymère préféré étant un polybrène® (PB), de préférence un polybrène® de masse moléculaire 4 000 à 6 000 g/moles fourni par la Société SIGMA ALDRICH®.

La solution de polymère est selon un aspect avantageux de l'invention une solution dans l'eau, par exemple dans l'eau déminéralisée.

La solution a généralement une concentration de 20 à 100 g/l.

L'imprégnation est réalisée par mise en contact du support solide avec la solution de polymère pendant une durée suffisante, qui est selon l'invention étonnamment courte, par exemple de 1 h(au lieu de 24 à 48 heures avec un autre polymère), moyennant quoi on obtient un revêtement uniforme de polymère sur le solide qui isole et protège le support solide, qui en épouse les formes et les porosités, et qui en conserve la surface spécifique.

La fixation du polymère sur le support solide est essentiellement régie par un phénomène d'adsorption avec des interactions de type électrostatiques, cette fixation est selon l'invention relativement forte sans nécessité de greffage par liaisons covalentes.

A l'issue de cette étape, on obtient directement, ainsi un support solide revêtu d'une pellicule de polymère échangeur d'anions.

Par pellicule, on entend comme déjà indiqué plus haut, un revêtement uniforme sur toute la surface du support solide et qui conserve sensiblement la surface spécifique de ce dernier.

Cette pellicule a généralement une épaisseur de 2 à 3 nm.

- Rinçage à l'eau, et éventuellement séchage sous vide.

On effectue ensuite dans l'étape suivante, l'imprégnation du support revêtu d'une pellicule de polymère échangeurs d'anions avec une solution aqueuse d'hexacyanoferrate (II) ou (III) de métal alcalin.

Cette solution est, de préférence, une solution dans l'eau pure, déminéralisée.

L'hexacyanoferrate de métal alcalin de départ est choisi de préférence parmi les hexacyanoferrates (II) et (III) de sodium ou de potassium.

La solution aqueuse d'hexacyanoferrate de métal alcalin mise en oeuvre a une concentration variable, c'est-à-dire que la concentration du sel d'hexacyanoferrate (II) ou (III) de métal alcalin en particulier de potassium ou de sodium est de préférence de 1 à 100 g/l, par exemple de 50 g/l.

D'autre part, la solution aqueuse d'hexacyanoferrate mise en oeuvre est préparée de telle sorte, que le rapport massique du sel d'hexacyanoferrate (II) ou (III) de métal alcalin en particulier de potassium ou de sodium, à la quantité du support d'imprégnation essentiellement constitué du support solide initial tel que la silice, soit,de préférence de 5 à 10%

L'imprégnation n'a pas été réalisée à un pH défini, réglé, contrôlé par exemple par un tampon. Il s'agit d'une solution dans l'eau, de préférence de l'eau pure, déminéralisée.

On obtient ainsi la fixation de la partie anionique $[Fe(CN)_6]^{4-}$ sur les groupements cationiques du polymère, cette fixation se fait par formation de liaisons de type électrostatique qui sont relativement forte selon le milieu, et cette fixation est généralement quantitative, c'est-à-dire que tous les sites cationiques du polymère réagissent. La fixation ne présente donc aucun caractère aléatoire.

Le support solide ainsi revêtu d'une pellicule de polymère échangeur d'anions auquel est fixé un hexacyanoferrate de métal alcalin est soumis ensuite à une opération de lavage, et éventuellement de séchage.

L'opération de lavage a pour but d'éliminer les sels d'hexacyanoferrate de métal alcalin qui n'ont pas été fixés sur le polymère et permet d'obtenir un matériau composite fixant des polluants minéraux dans lequel il n'existe plus d'hexacyanoferrate libre, non lié, pouvant être relargué.

Le lavage est effectué avec de l'eau déminéralisée.

La quantité de solution de rinçage utilisée est variable et peut aller de 100 à 1000 ml par gramme de produit traité.

L'étape suivante est l'addition d'une solution aqueuse de sel métallique sur le support solide revêtu d'une pellicule d'un polymère échangeur d'anions, auquel est fixé l'anion hexacyanoferrate.

Le sel de métal contenu dans cette solution aqueuse est un sel dont le métal correspond à l'hexacyanoferrate insoluble que l'on souhaite obtenir comme cela a déjà été indiqué plus haut.

Ce métal est choisi par exemple parmi le cuivre, le cobalt, le zinc, le cadmium, le nickel et le fer etc... Le sel de métal sera donc par exemple un nitrate, un sulfate, un chlorure, un acétate d'un de ces métaux à une concentration dans la solution aqueuse de préférence de 0,01 à 1 mol/l de préférence encore de 0,02 à 0,05 mol/l. La quantité de sel utilisée est par ailleurs de préférence environ de 0,4 mmole/g de support traité.

L'addition de la solution aqueuse du sel de métal n'a pas à être faite à un pH défini, à l'aide d'une solution tampon. La solution aqueuse est une solution dans l'eau pure, déminéralisée.

On effectue enfin dans une dernière étape le lavage du matériau final obtenu qui comprend ainsi le support solide revêtu d'une pellicule d'un polymère échangeur d'anions auquel est fixé un hexacyanoferrate de métal insoluble formant une couche mince.

Cette dernière étape de lavage est effectuée de la même manière et dans les mêmes conditions que l'étape de lavage déjà décrite plus haut, en utilisant de l'eau pure déminéralisée.

Il est, de préférence, obligatoire d'introduire dans l'eau déminéralisée un sel de métal alcalin, par exemple de sodium, dont l'anion est de préférence le même que celui du sel de métal mis en oeuvre lors de l'étape précédente, et éventuellement, en outre, l'acide correspondant : on pourra utiliser, par exemple, du nitrate de sodium et de l'acide nitrique.

Cette opération de lavage permet d'éliminer le sel de métal en excès et d'obtenir un produit final stable à la composition parfaitement définie.

Cette opération est d'une durée nettement moins longue que dans l'art antérieur car le matériau ne comporte pas de complexes instables relargables.

On effectue enfin une étape de séchage dans les conditions analogues à celles décrites plus haut.

De manière générale, le séchage est poursuivi jusqu'à ce que la masse du support reste sensiblement constante.

La teneur pondérale en fixateur minéral c'est-à-dire en hexacyanoferrate de métal insoluble fixé sur le polymère échangeur d'anions est généralement de 1 à 10 % par exemple de 3% par rapport à la masse du support minéral tel que la silice. Il a été constaté par analyse par activation neutronique que le rapport atomique de $M_2$/Fe peut varier de 1 à 5 sans que les propriétés de fixation, en particulier de décontamination ne soient affectées.

Le matériau solide composite fixant des polluants minéraux selon l'invention, peut être mis en oeuvre notamment, mais non exclusivement, dans un procédé de fixation d'au moins un polluant minéral par exemple d'un cation métallique contenu dans une solution, dans lequel ladite solution est mise en contact avec ledit matériau solide composite fixant des polluants minéraux.

Les matériaux selon l'invention, du fait de leurs excellentes propriétés tels qu'une excellente capacité d'échange, une excellente sélectivité, une vitesse de réaction élevée conviennent particulièrement à un tel usage.

Cette excellente efficacité est obtenue avec des quantités réduites de fixateur minéral tel que d'hexacyanoferrate insoluble.

De plus, les excellentes propriétés de tenue et de stabilité mécaniques du matériau selon l'invention, résultant de sa structure spécifique permettent son conditionnement en colonne et la mise en oeuvre en continu du procédé de fixation, par exemple en lit fluidisé, qui peut ainsi être facilement intégré dans une installation existante, par exemple dans une chaîne ou ligne de traitement comprenant plusieurs étapes.

Les solutions qui peuvent être traitées par le procédé de l'invention et avec le matériau solide composite fixant des polluants minéraux selon l'invention, sont très variées, et peuvent même contenir par exemple des agents corrosifs, acides, bases ou autres, du fait de l'excellente stabilité chimique du matériau selon l'invention.

Le matériau selon l'invention est utilisable en particulier sur une très large gamme de pH. Par exemple on pourra traiter des solutions aqueuses nitriques de concentration allant par exemple de 0,1 à 3M, des solutions acides ou neutres jusqu'à un pH 8, des solutions basiques etc... Il y a lieu toutefois d'adapter éventuellement la nature du support solide à la nature de la solution traitée. Il est par exemple connu que la silice ne résiste généralement pas à un pH basique, et qu'il est alors préférable d'utiliser un support solide par exemple en $TiO_2$, l'utilisation du matériau composite peut alors être étendue par exemple jusqu'à pH 12.

Le polluant minéral susceptible d'être fixé dans le procédé selon l'invention peut être tout polluant minéral c'est-à-dire par exemple tout polluant issu (à base) d'un métal ou d'un isotope, de préférence d'un isotope radioactif, de ce métal, susceptible de se trouver en solution.

Ce polluant est choisi de préférence parmi les complexes anioniques, les colloïdes, les cations et leurs mélanges.

Il s'agit de préférence d'un polluant, tel qu'un cation issu d'un élément choisi parmi Tl, Fe, Cs, Co, Ru, Ag,.... et les isotopes, en particulier les isotopes radioactifs de ceux-ci, parmi lesquels on peut citer $^{58}Co$, $^{60}Co$, $^{55\text{-}59}Fe$, $^{134}Cs$, $^{137}Cs$, $^{103,105,105,107}Ru$. Le cation métallique est en particulier le Césium $Cs^+$ ou le Thallium $Tl^{2+}$.

Le complexe anionique est par exemple $RuO_4^{2-}$.

Une utilisation préférée du matériau selon l'invention est la fixation du césium qui contribue à une grande part de l'activité gamma des liquides de l'industrie nucléaire et qui est fixé sélectivement par les hexacyanoferrates.

La concentration du ou des polluant(s) tel que du ou des cation(s) peut varier entre de larges limites : par exemple elle peut être pour chacun de ceux-ci de 0,1 picogramme à 100 mg/l, de préférence de 0,01 mg/l à 10 μg/l.

La solution à traiter par le procédé de l'invention est de préférence une solution aqueuse, qui peut outre le ou les polluant(s) tels que un ou des cation(s) à fixer, contenir d'autres sels en solution tels que $NaNo_3$ ou $LiNO_3$ ou encore $Al(NO_3)_3$ ou tout autre sel soluble de métal alcalin ou alcalino-terreux à une concentration pouvant atteindre jusqu'à 2 moles /l. La solution peut également contenir, comme indiqué plus haut, des acides, bases, et même des composés organiques.

La solution à traiter peut également être une solution dans un solvant organique pur tel que l'éthanol (alcool absolu), l'acétone ou autre, dans un mélange de ces solvants organiques, ou dans un mélange d'eau et d'un ou plusieurs de ces solvants organiques miscibles à l'eau.

Le matériau selon l'invention présente ainsi l'avantage de pouvoir traiter des solutions qui ne peuvent être traitées avec des résines organiques.

Cette solution peut consister en un liquide de procédé ou en un effluent industriel ou autre qui peut être issu en particulier de l'industrie et des installations nucléaires ou de toute autre activité liée au nucléaire.

Parmi les liquides et effluents divers de l'industrie nucléaire, des installations nucléaires et des activités mettant en oeuvre des radionucléides qui peuvent être traités par le procédé de l'invention on peut citer par exemple les eaux de refroidissement des centrales, et tous les effluents divers entrant en contact avec des radioisotopes tels que toutes les eaux de lavage, les solutions de régénération de résines etc...

Il est toutefois évident que le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

On a vu que le procédé de fixation selon l'invention est de préférence mis en oeuvre en continu, le matériau échangeur de cations selon l'invention, de préférence sous forme de particules, étant alors conditionné par exemple sous forme de colonne, le matériau formant de préférence un lit fluidisé dont la fluidisation est assurée par la solution à traiter, mais le procédé de fixation peut aussi être mis en oeuvre en discontinu, en mode « batch », la mise en contact du matériau échangeur et de la solution à traiter étant alors réalisée de préférence sous agitation. Le conditionnement en colonne permet de traiter en continu des quantités importantes de solution, avec un fort débit de celles-ci.

Le temps de contact de la solution à traiter avec le matériau échangeur est variable et peut aller de 1 minutes à 1 heure pour un fonctionnement en continu et de 10 minutes à 24 heures pour un fonctionnement en « batch ».

A l'issue du procédé de fixation le matériau solide composite fixateur (échangeur) selon l'invention dans lequel par exemple les cations de métal de l'hexacyanoferrate ont été échangés par les cations se trouvant dans la solution peut être directement stocké, car ses très grandes stabilités mécaniques et chimiques et sa nature essentiellement minérale autorisent un tel stockage sans qu'il ne se produise de dégradation du produit conduisant à des émanations d'hydrogène, ou bien il peut être traité par un procédé permettant un conditionnement pour un stockage de longue durée par exemple par vitrification.

La vitrification est particulièrement adaptée dans le cas où les cations fixés sont des radioisotopes et où le support est de la silice.

Le matériau selon l'invention, grâce à sa structure spécifique, et contrairement aux matériaux échangeurs de l'art antérieur à base d'hexacyanoferrate, peut être vitrifié sans danger car les quantités de fixateur minéral sont limitées et la décontamination à l'air sans danger.

Enfin, il serait également possible d'éluer le cation fixé, tel qu'un cation d'élément radioactif par dissolution sélective du support par exemple à l'aide d'une solution de soude concentrée.

La possibilité de stocker, de traiter par exemple par vitrification, de manière sûre, fiable le matériau selon l'invention à base d'hexacyanoferrate constitue un des avantages de l'invention et apporte une solution à un des problèmes essentiels non résolus présentés par tous les échangeurs de l'art antérieur qu'ils soient notamment massifs ou composites.

Les exemples suivants, donnés à titre illustratif et non limitatif, illustrent la préparation de matériaux échangeurs composites selon l'invention et les résultats obtenus par mise en oeuvre de ces matériaux échangeurs composites dans le cadre d'un procédé de fixation de cations selon l'invention appliqué à la fixation du césium à partir d'effluents radioactifs.

EXEMPLE 1

Dans cet exemple, on a réalisé la synthèse d'hexacyanoferrates en couche mince, immobilisés sur des silices recouvertes d'une phase polymérique échangeuse d'anions, ladite phase étant préparée de manière conforme à l'invention, c'est-à-dire à partir d'un polybrène®, ou non conforme à l'invention selon le document FR-A-2 765 812.

EXEMPLE 1A

Dans cet exemple. selon l'invention, le polymère échangeur d'anions est, conformément à l'invention, un polybrène® (PB) ayant la structure et les caractéristiques suivantes : Masse molaire 4 000 à 6 000 g/moles.
Le mode opératoire est le suivant :

- Un support de silice (Silica Gel 100®) fourni par la société Merck®, ayant une granulométrie de 0,063 à 0,200 mm, et une porosité de 100 µm, est imprégné de polybrène® (PB) fourni par la Société SIGMA ALDRICH®, par mise en contact en colonne pendant 1 h dans une solution à 15 % massique de polymère dans de l'eau déminéralisée.
- Le support ainsi revêtu est rincé avec de l'eau déminéralisée et un séchage sous vide est réalisé ;
- La capacité d'échange de ce support est mesurée à pH 7 en adsorbant une solution NaCl 1M et en l'échangeant par une solution de $NaNO_3$ 0,5M
- La capacité de l'échangeur d'anions est de 0,5 meg par g de silice.

On procède ensuite à une étape, dite « étape 1 ».

Etape 1 :

Le support adsorbé échangeur d'anions est imprégné par une solution de NaCl 1M, puis on procède à l'étape dite « étape 2 ».

Etape 2 :

Le support pelliculaire échangeur d'anions est mis en contact avec, imprégné par, une solution concentrée d'hexacyanoferrate II de sodium (50 g/l) dans l'eau (pas de tampon) .

- Le support est ensuite lavé dans de l'eau déminéralisée.
- On forme un hexacyanoferrate (II) de cuivre sur la surface pelliculaire par ajout d'une solution aqueuse de nitrate de cuivre (II) $2.10^{-2}$ M dans l'eau déminéralisée.

Etape 3 :

L'excès d'hexacyanoferrate de cuivre est éliminé par lavage à l'eau déminéralisée avec une solution de nitrate de sodium.

- L'analyse élémentaire du produit final obtenu est donnée dans la tableau I ci-dessous.

EXEMPLE 1B

Dans cet exemple selon l'invention, le polymère échangeur d'ions est de nouveau, conformément à l'invention, un polybrène® analogue à celui de l'exemple 1B.
Le mode opératoire est le même que dans l'exemple 1A, sauf que l'étape 1 est omise.
L'analyse élémentaire du produit final obtenu est donnée dans le tableau I.

Exemple 1C (comparatif)

Dans cet exemple, on prépare un matériau solide composite non conforme à l'invention, c'est-à-dire selon le mode opératoire du document FR-A-2 765 812.
Le polymère échangeur d'anions étant préparé à partir de polyéthyleimine (PEI) et non de polybrène®.

Le mode opératoire et le produit sont ceux du document FR-A-2 765 812.
L'analyse élémentaire du produit final obtenu est basée également dans le tableau I ci-dessous.

TABLEAU I

| Composition élémentaire des matériaux selon l'invention, et selon le document FR-A-2 765 812, à base d'hexacyanoferrate de cuivre (les pourcentages sont des pourcentages massiques par g de silice) | | | | |
|---|---|---|---|---|
| Echantillons | Mode de synthèse | Cu (% massique) | Fe (% massique) | Cu/Fe (at/at) |
| Ex. 1C (comp.) | Etapes 1, 2, 3 | 1,75 | 1,93 | 0,8 |
| Ex. 1A | Etapes 1, 2, 3 | 0,97 | 0,78 | 1,15 |
| Ex. 1B | Etapes 2, 3 | 0,96 | 0,50 | 1,77 |

La stabilité des produits selon l'invention est démontrée sur le tableau II par le fait que les produits selon l'invention à base de polybrène® ne relarguent que très peu de fer et quasiment pas de cuivre lors des rinçages en fin de synthèse par rapport au produit préparé selon le document FR-A-2 765 812 avec un polymère PEI.

TABLEAU II

| Concentration de cuivre et de fer relargués lors des rinçages | | |
|---|---|---|
| Produits - Echantillons | $[Cu^{2+}]$ total (mg/l) | $[Fe^{2+}]$ (mg/l) |
| Ex. 1C (comp.) | 12 | 50 |
| Ex. 1A | 8 | 6 |
| Ex. 1B | 1 | 2 |

EXEMPLE 2 : Essais de fixation du césium

Dans cet exemple, on a étudié la fixation du césium radioactif $^{134}Cs$ et $^{137}Cs$ contenu dans divers effluents, sur divers produits à base d'hexacyanoferrate, à savoir :

- les matériaux échangeurs composites selon l'invention préparés dans les exemples 1A et 1B ci-dessus.
- le matériau préparé selon le document FR-A-2 765 812 déjà décrit plus haut dans l'exemple 1C.

La sélectivité du césium pour les phases, produits, composites est définie grâce à la constante de distribution Kd (1) entre une phase solide et une phase liquide chargée en $^{134}Cs$ et $^{137}Cs$.

$$Kd = \frac{\text{Quantité de Cs * fixé par gramme de phase solide}}{\text{Quantité de Cs * restant par ml de solution}} \quad (1)$$

Plus la valeur de Kd est importante et plus le Cs* est retenu dans la phase solide. Une valeur de Kd supérieure à 10 000 pour des temps de contact de 24 h représente une excellente affinité du césium pour la phase solide.
Les effluents radioactifs traités sont des effluents réels issus de la pile OSIRIS du centre d'études nucléaires de SACLAY dont les caractéristiques relatives à la radioactivité sont mentionnées dans le tableau II. Il s'agit d'une part de l'eau de refroidissement de la pile qui est désignée par « OSI » dans le tableau et dont le pH est neutre, et d'autre part de la solution de rinçage, de régénération, des résines qui est désignée par « BF6 » dans le tableau et qui est constituée par une solution d'acide nitrique à 0,1 M. Afin d'augmenter la précision des comptages, un traceur $^{134}Cs$ a été ajouté à la solution OSI.

TABLEAU III

| Radioactivité des solutions traitées en curie par $m^3$. | | |
|---|---|---|
| | $^{134}Cs$ | $^{137}Cs$ |
| OSI | 1,02* | 0,36** |

* Traceur ajouté
** Très variable selon les solutions

TABLEAU III (suite)

| Radioactivité des solutions traitées en curie par $m^3$. | | |
|---|---|---|
| | $^{134}Cs$ | $^{137}Cs$ |
| BF6 | 0,52 | 2,96 |

Le mode opératoire des essais est le suivant :

10 à 20 mg de produit sont ajoutés à 50 mL ($cm^3$) de solution radioactive à traiter et agités pendant une durée de 10 minutes ou d'un jour selon les essais.

A la fin de la durée choisie, la solution est filtrée, sa radioactivité est mesurée par spectrométrie gamma et est comparée à celle de la solution de départ.

Les valeurs ainsi obtenues permettent de calculer le coefficient de distribution $^{137}Cs$ représentatif de l'affinité du produit par cet élément, il est défini par le rapport de la radioactivité fixée par gramme de produit à la radioactivité résiduelle en solution par $cm^3$ de solution. Autrement dit le coefficient distribution $K_d$ du césium s'établit selon la relation (2) :

$$Kd = \frac{\text{Activité du blanc - Activité de la solution * Volume de solution filtrée (ml)}}{\text{Masse de l'échantillon (g) * Activité de la solution}} \quad (2)$$

Plus la valeur de Kd est importante et plus le $Cs^+$ est retenu dans la phase solide. Une valeur de Kd supérieure à 10 000 pour des temps de contact de 24 pour des solutions à pH = 7 représente une excellente affinité du césium pour la phase solide.

Les résultats des essais effectués pendant des durées de contact différentes (10 minutes et 1 jours) avec des solutions différentes (eau de refroidissement « OSI » à pH voisin de 7, et eau de lavage de résines « $BF_6$ » c'est-à-dire solution nitrique à 0,1 M pH = 1) et avec différents échantillons de produits à base d'hexacyanoferrates selon l'invention (Ex. 1A et 1B) et selon le document FR-A-2 765 812 (Ex. 1C) sont regroupés dans le tableau IV ci-dessous:

TABLEAU IV

| Coefficients de distribution Kd (du césium) sur divers produits à base d'hexacyanoferrates (par g de produit) | | | | | |
|---|---|---|---|---|---|
| Produit - Echantillons | Protocole utilisé | Eau de refroidissement OSI (pH ~ 7) | | Eau de lavage de résines BF 6 (pH ~ 1) | |
| Durée de contact | | 10 min. | 24 h | 10 min. | 24 h |
| Ex. 1C (comp.) | Etapes 1, 2, 3 | > $10^4$ | > $10^5$ | 4 $10^3$ | 3,1 $10^4$ |
| Ex. 1A | Etapes 2, 3 | 2, 6 $10^3$ | > $10^5$ | 1,3 $10^3$ | 6,3 $10^3$ |
| Ex. 1B | Etapes 1, 2, 3 | 2,5 $10^4$ | > $10^5$ | 2,5 $10^3$ | 5 $10^3$ |

Les résultats indiqués ci-dessus montrent que les constantes de distribution obtenues avec les produits selon la présente invention sont identiques à celles des produits du brevet de C.Loos-Neskovic (FR-A-2 765 812).

EXEMPLE 3 : Essais de décontamination en colonne

La percolation d'une solution radioactive, qui est une solution « OSI », telle que définie plus haut, sur les phases synthétisées, conformes ou non à l'invention, conditionnées dans la colonne de synthèse, permet de déterminer l'affinité du césium pour celle-ci, en calculant le coefficient de décontamination.

Le facteur de décontamination est l'activité de la solution avant passage sur la phase sur l'activité de la solution après passage sur la phase (3).

$$Fd = \frac{\text{Activité de la solution (par exemple OSI)}}{\text{Activité de la fraction récupérée}} \quad (3)$$

En pratique pour prélever la solution, un tube comportant un double filtre plonge dans 3 L de solution OSI, comme décrit dans le tableau III.

Le premier filtre est un fritté qui retient les particules de dimension supérieure à 20 μm, le suivant un filtre à

porosité plus faible. Une pompe péristaltique placée en série prélève à un débit de 3 mL/min. la solution vers une colonne en acier inoxydable (30*5 mm) contenant 1 g de composite. Cette colonne est fermée à chaque extrémité par un fritté et blindée sur toute sa hauteur par un château de plomb d'une épaisseur de 5 cm. En sortie de colonne, 50 mL d'éluat sont recueilli dans un flacon d'éluat tous les 250 mL de solution traitée. L'ensemble du montage est mis dans un bac de rétention d'un volume de 10 mL. La radioactivité des éluats, ainsi que du témoin, est ensuite mesurée par spectrométrie gamma.

Les résultats sont reportés dans le tableau V.

TABLEAU V

| Coefficient de décontamination en fonction du volume de colonne et de la nature du produit composite | | | | |
|---|---|---|---|---|
| Produits - Echantillons | Solution | Vohume de colonne | Débit mL/min. | Coefficient De décontamination |
| Ex. 1C (comp.) | Osi + $^{134}$ Cs | 3 000 | 3 | > 6 000 |
| Ex. 1A | Osi + $^{134}$ Cs | 5 000 | 3 | > 6 000 |
| Ex. 1B | Osi + $^{134}$ Cs | 3 000 | 3 | > 6 000 |

Les valeurs reportées dans ce tableau ne sont que des valeurs limites car nous sommes dans les limites de réception de l'appareillage.

Ce tableau montre que les résultats obtenus avec les phases synthétisées selon l'invention sont aussi bons que ceux obtenus avec les phases à base de silice/polyéthyleimine/hexacyanoferrate de cuivre.

**Revendications**

1. Matériau solide composite fixant des polluants minéraux, à base d'hexacyanoferrate de métal, comprenant un support solide revêtu d'une pellicule d'un polymère échangeur d'anions auquel est fixé un hexacyanoferrate de métal insoluble formant une couche mince, **caractérisé en ce que** ledit polymère est un polymère non réticulé, qui comporte en tant que groupes échangeurs d'anions uniquement des groupes ammonium quaternaires, et **en ce qu'**il ne comporte pas de groupements amines primaires, secondaires et tertiaires.

2. Matériau selon la revendication 1, dans lequel ledit polymère est un polybrène®.

3. Matériau selon la revendication 1, **caractérisé en ce que** la quantité d'hexacyanoferrate de métal fixé est de 1 à 10 % en poids par rapport à la masse du support solide.

4. Matériau selon la revendication 1, **caractérisé en ce que** le support est choisi parmi la silice, l'alumine, l'oxyde de titane, l'oxyde de zirconium, la terre de diatomées, les zéolithes, et les verres.

5. Matériau selon l'une quelconque des revendications précédentes **caractérisé en ce que** le support se présente sous forme de particules, de fibres, de membrane, de tube creux, ou d'étoffe tissée ou non tissée.

6. Matériau selon la revendication 5 **caractérisé en ce que** le support se présente sous forme de particules, et a une granulométrie de 1 à 500 μm.

7. Matériau selon l'une quelconque des revendications 5 à 6 **caractérisé en ce que** le support a une surface spécifique de 10 à 500 $m^2/g$.

8. Matériau selon l'une quelconque des revendications 5 à 7 **caractérisé en ce que** le support a une taille moyenne des pores de 100 à 1000 Å.

9. Matériau selon l'une quelconque des revendications 1 à 8 **caractérisé en ce que** ledit hexacyanoferrate de métal est choisi parmi les hexacyanoferrates de cuivre, de cobalt, de zinc, de cadmium, l'hexacyanoferrate de nickel, l'hexacyanoferrate de fer, et les hexacyanoferrates mixtes se rapportant à ces sels.

10. Procédé de préparation du matériau selon l'une quelconque des revendications 1 à 9 **caractérisé en ce qu'**il comprend les étapes suivantes :

- imprégnation d'un support solide avec une solution aqueuse d'un polymère échangeur d'anions non réticulé comportant en tant que groupes échangeurs d'anions uniquement des groupes ammonium quaternaires et ne comportant pas de groupements amines primaires, secondaires et tertiaires, pour former une pellicule dudit polymère sur ledit support solide ;
- lavage à l'eau déminéralisée, et éventuellement séchage sous vide ;
- imprégnation du support solide ainsi revêtu d'une pellicule de polymère échangeur d'anions, par une solution aqueuse d'hexacyanoferrate de métal alcalin;
- lavage à l'eau déminéralisée, et éventuellement séchage sous vide, dudit support solide revêtu d'une pellicule de polymère échangeur d'anions auquel est fixé un hexacyanoferrate de métal alcalin;
- addition d'une solution aqueuse d'un sel métallique au dit support solide revêtu, pour former un matériau solide composite fixant des polluants minéraux, comprenant le support solide revêtu d'une pellicule de polymère échangeur d'anions auquel est fixé un hexacyanoferrate de métal insoluble formant une couche mince.
- lavage à l'eau déminéralisée, et éventuellement séchage sous vide.

**11.** Procédé selon la revendication 10 **caractérisé en ce que** la solution de polymère organique est une solution dans l'eau, par exemple dans l'eau déminéralisée.

**12.** Procédé selon la revendication 10 **caractérisé en ce que** ledit hexacyanoferrate de métal alcalin est choisi parmi les hexacyanoferrates (II) et (III) de sodium ou de potassium.

**13.** Procédé selon la revendication 10 **caractérisé en ce que** la solution aqueuse d'hexacyanoferrate de métal alcalin est une solution dans l'eau pure, déminéralisée.

**14.** Procédé selon la revendication 10 **caractérisé en ce que** ledit sel métallique est choisi parmi les sels de cuivre, cobalt, nickel, cadmium, zinc, fer.

**15.** Procédé selon la revendication 10 **caractérisé en ce que** l'anion dudit sel métallique est choisi parmi les nitrates, sulfates, chlorures, et acétates.

**16.** Procédé selon l'une quelconque des revendications 10 à 15, dans lequel, dans la dernière étape de lavage, on introduit dans l'eau déminéralisée un sel de métal alcalin dont l'anion est le même que celui du sel métallique ajouté au support lors de l'étape précédente, et éventuellement, en outre, l'acide correspondant.

**17.** Procédé selon la revendication 16, dans lequel, dans la dernière étape de lavage, on introduit dans l'eau déminéralisée du nitrate de sodium et de l'acide nitrique.

**18.** Procédé de fixation d'au moins un polluant minéral contenu dans une solution, par mise en contact de ladite solution avec le matériau solide composite fixant des polluants minéraux selon l'une quelconque des revendications 1 à 9.

**19.** Procédé selon la revendication 18 **caractérisé en ce que** ladite solution est une solution aqueuse.

**20.** Procédé selon la revendication 18 **caractérisé en ce que** ladite solution est un liquide de procédé ou un effluent industriel.

**21.** Procédé selon la revendication 18 **caractérisé en ce que** ladite solution est choisie parmi les liquides et effluents issus de l'industrie et des installations nucléaires et des activités mettant en oeuvre des radionucléides.

**22.** Procédé selon la revendication 18 **caractérisé en ce que** le procédé est réalisé en continu.

**23.** Procédé selon la revendication 22 **caractérisé en ce que** le matériau solide composite fixant des polluants minéraux est conditionné en colonne.

**24.** Procédé selon l'une quelconque des revendications 18 à 23 **caractérisé en ce que** ledit polluant est présent à une concentration de 0,1 picogramme à 100 mg/l.

**25.** Procédé selon l'une quelconque des revendications 18 à 24 **caractérisé en ce que** ledit polluant est issu d'un métal ou d'un isotope radioactif dudit métal.

**26.** Procédé selon la revendication 25 **caractérisé en ce que** ledit polluant est choisi parmi les complexes anioniques, les colloïdes et les cations.

**27.** Procédé selon l'une quelconque des revendications 18 à 26 **caractérisé en ce que** ledit polluant est un élément choisi parmi Cs, Co, Ag, Ru, Fe et Tl et les isotopes de ceux-ci

**Claims**

**1.** Composite solid material fixing inorganic contaminants, based on metal hexacyanoferrate, comprising a solid support coated with a film of an anion-exchange polymer to which is fixed an insoluble metal hexacyanoferrate forming a thin layer, **characterized in that** said polymer is a noncrosslinked polymer, which comprises, as anion-exchange groups, solely quaternary ammonium groups, and **in that** it does not comprise primary, secondary or tertiary amine groups.

**2.** Material according to Claim 1, in which said polymer is a polybrene®.

**3.** Material according to Claim 1, **characterized in that** the amount of metal hexacyanoferrate fixed is from 1 to 10% by weight with respect to the weight of the solid support.

**4.** Material according to Claim 1, **characterized in that** the support is chosen from silica, alumina, titanium oxide, zirconium oxide, diatomaceous earth, zeolites and glasses.

**5.** Material according to any one of the preceding claims, **characterized in that** the support is provided in the form of particles, of fibres, of a membrane, of a hollow tube or of a woven or nonwoven fabric.

**6.** Material according to Claim 5, **characterized in that** the support is provided in the form of particles and has a particle size of 1 to 500 μm.

**7.** Material according to either one of Claims 5 and 6, **characterized in that** the support has a specific surface of 10 to 500 $m^2/g$.

**8.** Material according to any one of Claims 5 to 7, **characterized in that** the support has a mean pore size of 100 to 1 000 Å.

**9.** Material according to any one of Claims 1 to 8, **characterized in that** said metal hexacyanoferrate is chosen from copper, cobalt, zinc, cadmium, nickel and iron hexacyanoferrates and the mixed hexacyanoferrates relating to these salts.

**10.** Process for the preparation of the material according to any one of Claims 1 to 9, **characterized in that** it comprises the following stages:

- impregnation of a solid support with an aqueous solution of a noncrosslinked anion-exchange polymer comprising, as anion-exchange groups, solely quaternary ammonium groups and not comprising primary, secondary and tertiary amine groups, in order to form a film of said polymer on said solid support;
- washing with demineralized water and optionally drying under vacuum;
- impregnation of the solid support thus coated with a film of anion-exchange polymer with an aqueous solution of alkali metal hexacyanoferrate;
- washing with demineralized water, and optionally drying under vacuum, said solid support coated with a thin film of anion-exchange polymer to which is fixed an alkali metal hexacyanoferrate;
- addition of an aqueous solution of a metal salt to said coated solid support, in order to form a composite solid material which fixes inorganic contaminants, comprising the solid support coated with a thin film of anion-exchange polymer to which is fixed an insoluble metal hexacyanoferrate forming a thin layer;
- washing with demineralized water, and optionally drying under vacuum.

**11.** Process according to Claim 10, **characterized in that** the organic polymer solution is a solution in water, for example in demineralized water.

12. Process according to Claim 10, **characterized in that** said alkali metal hexacyanoferrate is chosen from sodium hexacyanoferrate(II), sodium hexacyanoferrate(III), potassium hexacyanoferrate(II) or potassium hexacyanoferrate(III).

13. Process according to Claim 10, **characterized in that** the aqueous alkali metal hexacyanoferrate solution is a solution in pure, demineralized water.

14. Process according to Claim 10, **characterized in that** said metal salt is chosen from copper, cobalt, nickel, cadmium, zinc and iron salts.

15. Process according to Claim 10, **characterized in that** the anion of said metal salt is chosen from nitrates, sulphates, chlorides and acetates.

16. Process according to any one of Claims 10 to 15, in which, in the final washing stage, an alkali metal salt, the anion of which is the same as that of the metal salt added to the support during the preceding stage, and, in addition, optionally the corresponding acid, are introduced into the demineralized water.

17. Process according to Claim 16, in which, in the final washing stage, sodium nitrate and nitric acid are introduced into the demineralized water.

18. Process for fixing at least one inorganic contaminant present in a solution by bringing said solution into contact with the composite solid material which fixes inorganic contaminants according to any one of Claims 1 to 9.

19. Process according to Claim 18, **characterized in that** said solution is an aqueous solution.

20. Process according to Claim 18, **characterized in that** said solution is a process liquid or an industrial effluent.

21. Process according to Claim 18, **characterized in that** said solution is chosen from liquids and effluents resulting from the nuclear industry and from nuclear plants and from activities employing radionuclides.

22. Process according to Claim 18, **characterized in that** the process is carried out continuously.

23. Process according to Claim 22, **characterized in that** the composite solid material which fixes inorganic contaminants is packed in a column.

24. Process according to any one of Claims 18 to 23, **characterized in that** said contaminant is present at a concentration of 0.1 picogram to 100 mg/l.

25. Process according to any one of Claims 18 to 24, **characterized in that** said contaminant results from a metal or from a radioactive isotope of said metal.

26. Process according to Claim 25, **characterized in that** said contaminant is chosen from anionic complexes, colloids and cations.

27. Process according to any one of Claims 18 to 26, **characterized in that** said contaminant is an element chosen from Cs, Co, Ag, Ru, Fe and Tl and the isotopes thereof.

## Patentansprüche

1. Festes Verbundmaterial zum Fixieren von mineralischen Schadstoffen auf Basis eines Metallhexacyanoferrats, das umfasst einen festen Träger, der mit einem dünnen Film aus einem Anionenaustauscher-Polymer bedeckt ist, an dem ein unlösliches Metallhexacyanoferrat fixiert ist, das eine dünne Schicht bildet, **dadurch gekennzeichnet, dass** das Polymer ein nicht vernetztes Polymer ist, das als Anionenaustauschergruppen nur quaternäre Ammoniumgruppen aufweist, und dass es keine primären, sekundären und tertiären Amingruppen enthält.

2. Material nach Anspruch 1, **dadurch gekennzeichnet, dass** das Polymer ein Polybrene® ist.

3. Material nach Anspruch 1, **dadurch gekennzeichnet, dass** die Menge des fixierten Metallhexacyanoferrats 1 bis 10 Gew.-%, bezogen auf die Masse des festen Trägers, beträgt.

4. Material nach Anspruch 1, **dadurch gekennzeichnet, dass** der Träger ausgewählt ist aus der Gruppe Siliciumdioxid, Aluminiumoxid, Titanoxid, Zirkoniumoxid, Diatomeenerde, der Zeolithe und der Gläser.

5. Material nach einem der vorhergehenden Ansprüche, **dadurch gekennzeichnet, dass** der Träger in Form von Teilchen, Fasern, einer Membran, eines hohlen Rohres oder eines gewebten oder nicht gewebten Gewebes vorliegt.

6. Material nach Anspruch 5; **dadurch gekennzeichnet, dass** der Träger in Form von Teilchen vorliegt und eine Teilchengröße von 1 bis 500 μm hat.

7. Material nach einem der Ansprüche 5 bis 6, **dadurch gekennzeichnet, dass** der Träger eine spezifische Oberflächengröße von 10 bis 500 $m^2$/g hat.

8. Material nach einem der Ansprüche 5 bis 7, **dadurch gekennzeichnet, dass** der Träger eine mittlere Porengröße von 100 bis 1000 Å aufweist.

9. Material nach einem der Ansprüche 1 bis 8, **dadurch gekennzeichnet, dass** das Metallhexacyanoferrat ausgewählt ist aus der Gruppe der Kupfer-, Kobalt-, Zink-, Cadmiumhexacyanoferrate, Nickelhexacyanoferrat, Eisenhexacyanoferrat und der gemischen Hexacyanoferrate dieser Salze.

10. Verfahren zur Herstellung des Materials nach einem der Ansprüche 1 bis 9, **dadurch gekennzeichnet, dass** es die folgenden Stufen umfasst:

- Imprägnieren eines festen Trägers mit einer wässrigen Lösung eines nicht vernetzten Anionenaustauscher-Polymers, das als Anionenaustauschergruppen nur quaternäre Ammoniumgruppen und keine primären, sekundären und tertiären Amingruppen enthält, zur Bildung eines dünnen Films aus dem Polymer auf dem festen Träger;
- Waschen mit entmineralisiertem Wasser und gegebenenfalls Trocknen unter Vakuum;
- Imprägnieren des auf diese Weise mit einem dünnen Film aus einem Anionenaustauscher-Polymer beschichteten festen Trägers mit einer wässrigen Alkalimetallhexacyanoferrat-Lösung;
- Waschen mit entmineralisiertem Wasser und gegebenenfalls Trocknen unter Vakuum des festen Trägers, der mit einem dünnen Film aus einem Anionenaustauscher-Polymer beschichtet ist, an dem ein Alkalimetallhexacyanoferrat fixiert ist;
- Zugabe einer wässrigen Lösung eines Metallsalzes zu dem beschichteten festen Träger zur Bildung eines festen Verbundmaterials, an dem mineralische Schadstoffe haften, das den festen Träger umfasst, der mit einem dünnen Film aus einem Anionenaustauscher-Polymer beschichtet ist, an dem ein unlösliches Metallhexacyanoferrat fixiert ist unter Bildung einer dünnen Schicht und
- Waschen mit entmineralisiertem Wasser und gegebenenfalls Trocknen unter Vakuum.

11. Verfahren nach Anspruch 10, **dadurch gekennzeichnet, dass** die organische Polymerlösung eine Lösung in Wasser, beispielsweise in entmineralisiertem Wasser, ist.

12. Verfahren nach Anspruch 10, **dadurch gekennzeichnet, dass** das Alkalimetallhexacyanoferrat ausgewählt wird unter den Hexacyanoferraten(II) und (III) von Natrium oder Kalium.

13. Verfahren nach Anspruch 10, **dadurch gekennzeichnet, dass** die wässrige Alkalimetallhexacyanoferrat-Lösung eine Lösung in reinem entmineralisiertem Wasser ist.

14. Verfahren nach Anspruch 10, **dadurch gekennzeichnet, dass** das Metallsalz ausgewählt wird unter den Salzen von Kupfer, Kobalt, Nickel, Cadmium, Zink und Eisen.

15. Verfahren nach Anspruch 10, **dadurch gekennzeichnet, dass** das Anion des Metallsalzes ausgewählt wird unter den Nitraten, Sulfaten, Chloriden und Acetaten.

16. Verfahren nach einem der Ansprüche 10 bis 15, bei dem man in der letzten Waschstufe in das entmineralisierte

Wasser ein Alkalimetallsalz, dessen Anion das gleiche ist wie das Anion des Metallsalzes, das dem Träger in der vorhergehenden Stufe zugegeben worden ist, und gegebenenfalls außerdem die entsprechende Säure einführt.

**17.** Verfahren nach Anspruch 16, bei dem man in der letzten Waschstufe in das entmineralisierte Wasser Natriumnitrat und Salpetersäure einführt.

**18.** Verfahren zum Fixieren mindestens eines mineralischen Schadstoffes, der in einer Lösung enthalten ist, durch Inkontaktbringen der genannten Lösung mit dem festen Verbundmaterial zur Fixierung von mineralischen Schadstoffen nach einem der Ansprüche 1 bis 9.

**19.** Verfahren nach Anspruch 18, **dadurch gekennzeichnet, dass** die Lösung eine wässrige Lösung ist.

**20.** Verfahren nach Anspruch 18, **dadurch gekennzeichnet, dass** die Lösung eine Prozessflüssigkeit oder ein Industrieabwasser ist.

**21.** Verfahren nach Anspruch 18, **dadurch gekennzeichnet, dass** die Lösung ausgewählt wird unter Flüssigkeiten und Abwässern, die aus der Industrie und Kernanlagen und Aktivitäten stammen, bei denen Radionuclide eingesetzt werden.

**22.** Verfahren nach Anspruch 18, **dadurch gekennzeichnet, dass** das Verfahren kontinuierlich durchgeführt wird.

**23.** Verfahren nach Anspruch 22, **dadurch gekennzeichnet, dass** das feste Verbundmaterial, das mineralische Schadstoffe fixiert, in einer Kolonne konditioniert wird.

**24.** Verfahren nach einem der Ansprüche 18 bis 23, **dadurch gekennzeichnet, dass** der Schadstoff in einer Konzentration von 0,1 pg bis 100 mg/l vorliegt.

**25.** Verfahren nach einem der Ansprüche 18 bis 24, **dadurch gekennzeichnet, dass** der Schadstoff aus einem Metall oder einem radioaktiven Isotop des Metalls stammt.

**26.** Verfahren nach Anspruch 25, **dadurch gekennzeichnet, dass** der Schadstoff ausgewählt wird unter den anionischen Komplexen, Kolloiden und Kationen.

**27.** Verfahren nach einem der Ansprüche 18 bis 26, **dadurch gekennzeichnet, dass** der Schadstoff ein Element ist, das ausgewählt wird aus der Gruppe Cs, Co, Ag, Ru, Fe und Tℓ und den Isotopen derselben.